Europäisches Patentamt

European Patent Office

Office européen des brevets

(19)

(11) **EP 0 582 510 B1**

(12) **FASCICULE DE BREVET EUROPEEN**

(45) Date de publication et mention
de la délivrance du brevet:
**02.01.1997 Bulletin 1997/01**

(51) Int Cl.6: **C08B 37/18**

(21) Numéro de dépôt: **93401968.8**

(22) Date de dépôt: **29.07.1993**

(54) **Procédé de préparation d'une solution purifiée d'inuline à partir du jus de chicorée**

Verfahren zur Herstellung einer gereinigten Lösung von Inulin aus Chicoreesaft

Process for obtaining a purified solution of inulin from chicory juice

(84) Etats contractants désignés:
**AT BE CH DE DK ES FR GB GR IE IT LI LU MC NL PT SE**

(30) Priorité: **06.08.1992 FR 9209779**

(43) Date de publication de la demande:
**09.02.1994 Bulletin 1994/06**

(73) Titulaire: **SUCRERIES ET DISTILLERIES DE L'AISNE, Société dite**
**F-02390 Origny-Sainte-Benoite (FR)**

(72) Inventeur: **Alard, Georges Maurice**
**F-02120 Guise (FR)**

(74) Mandataire: **Bourgognon, Jean-Marie**
**Cabinet Flechner**
**22, Avenue de Friedland**
**75008 Paris (FR)**

(56) Documents cités:
**US-A- 1 971 871**

## Description

La présente invention se rapporte aux procédés de préparation de solutions purifiées d'inuline à partir du jus de chicorée.

L'inuline est le polysaccharide de réserve caractéristique de la chicorée. C'est un polyanhydrofructose de faible masse moléculaire (comprise entre 1500 et 5000 selon le degré de maturité de la racine de chicorée).

Les molécules de fructose de la chaîne principale sont liées entre elles par des liaisons glycosidiques de type β, 1-2.

Le dernier élément de la chaîne est un glucose, le nombre maximum de fructose constituant la chaîne principale est généralement compris entre 20 et 55.

L'inuline peut présenter aussi des courtes chaînes latérales constituées de 2 à 5 éléments de fructose.

L'inuline est présente dans des vacuoles, elles-mêmes situées dans les cellules de la racine.

L'inuline est une poudre blanche, très hygroscopique, soluble dans l'eau chaude, peu soluble dans l'eau froide et insoluble dans l'alcool.

L'inuline est hydrolysée en fructose sous l'action des acides dilués ou d'enzymes spécifiques (inulinases).

L'inuline est utilisée comme charge acalorique dans les denrées alimentaires. En outre, l'inuline est un intermédiaire de la préparation du fructose à partir de la racine de chicorée.

Pour préparer une solution d'inuline à partir du jus de chicorée, on procède actuellement de la manière suivante : on découpe les racines de chicorée en cossettes et on extrait l'inuline par osmodiffusion. On obtient ainsi un jus de chicorée riche en inuline, mais contenant encore de nombreuses impuretés que l'on épure par voie calcocarbonique. Cette épuration s'effectue de deux façons différentes. Suivant un premier mode opératoire, on chaule et on carbonate simultanément. On obtient ainsi un jus purifié, mais qui s'avère très difficile à filtrer ou à décanter, ce qui entraîne des pertes d'inuline dans le gâteau de carbonate de calcium. Le second mode opératoire consiste à préchauler le jus de chicorée, puis successivement, à le chauler avec une grande de quantité de chaux portant le pH à 13 environ, et à le carbonater pour ramener le pH à 11. Mais, à un pH aussi élevé, l'inuline s'hydrolyse et se scinde en fructose et en glucose, lesquels sont eux-mêmes détruits par la chaux. Il s'ensuit des pertes significatives d'inuline.

L'invention vise un procédé de préparation d'une solution purifiée d'inuline, qui permet de diminuer les pertes de celle-ci lors de l'opération.

Le procédé de préparation d'une solution purifiée d'inuline à partir du jus de chicorée, consiste à préchauler le jus de chicorée jusqu'à un pH ne dépassant pas 11, puis à le chauler et à le carbonater simultanément et de manière que le pH du jus ne dépasse pas 11.

Le préchaulage permet d'obtenir un jus facilement filtrable et décantable, tandis que, en menant simultanément le chaulage et la carbonatation, on peut le faire à un pH relativement modéré, ce qui minimise les pertes d'inuline dues à la décomposition de celle-ci et à la décomposition du fructose et du glucose.

On effectue habituellement le préchaulage avec un débit massique de chaux vive compris entre 2 et 3 grammes de CaO par litre de jus. On peut effectuer ce préchaulage à **une** température ne dépassant pas 75°C environ. En général, on l'effectue à la température de sortie de diffusion, qui varie de 35 à 72°C suivant que l'on effectue la diffusion par un procédé à froid ou par un procédé habituel.

On effectue ensuite le chaulage et la carbonatation simultanément par addition au jus d'un débit volumique de $CO_2$ compris entre 3 et 6 litres pour un débit massique de chaux vive compris entre 8 et 15 grammes de CaO par litre de jus. On effectue ces deux opérations simultanées habituellement à une température comprise entre 75 et 90°C, et notamment à une température comprise entre 80 et 85°C.

Suivant un mode de réalisation particulièrement recommandé, on effectue le chaulage et la carbonatation simultanés moins de 15 minutes et, de préférence, moins de 5 minutes après le préchaulage, de manière à minimiser le temps de contact entre la solution riche en inuline et la chaux et à minimiser ainsi le danger d'une décomposition de l'inuline.

L'exemple 1 illustre l'invention, tandis que l'exemple 2 illustre l'art antérieur.

Exemple 1 :

Les chicorées subissent d'abord un lavage associé à un épierrage afin de les débarrasser de la terre adhérant à la racine et des pierres qui auraient été ramassées en même temps que les racines.

Ce lavage/épierrage est effectué soit en lavage discontinu sur laveuse rotative de type parmentière, soit en lavage continu dans un cylindre rotatif. Les racines de chicorée lavées sont ensuite introduites dans un coupe-racine pour être transformées en cossettes. Le découpeur est équipé de couteaux montés sur cadre rotatif permettant d'obtenir des cossettes de 14-15 m/100 g (coupe-racine URSCHELL, couteaux "V-cut", vitesse de rotation du porte-couteaux : 400 tr/min).

Les cossettes (400-500 kg/h), de chicorée, dont la composition est donnée dans le tableau I, sont ensuite transportée vers un diffuseur par bande transporteuse dont la vitesse est asservie à celle du tapis du diffuseur pilote de type De SMET utilisé en sucrerie et dont les caractéristiques sont les suivantes :

| longueur : | 11 m, |
|---|---|
| largeur utile : | 0,4 m, |
| 1 boucle d'échaudage | |
| 18 boucles de recirculation | |

Tableau I :

| Composition des cossettes de chicorée avant diffusion | | |
|---|---|---|
| Eau : | 73,34 % | |
| Inuline : | 16,48 % | |
| Sucres : | 1,33 % | (glucose, fructose) |
| Impuretés : | 3,90 % | (protéines, non-sucres solubles) |
| Marc : | 4,95 % | |
| | 100 % | |

La température de l'eau d'échaudage est de 85°C, la température de l'eau de diffusion est de 65-70°C.

Le soutirage de jus de diffusion est de 132 à 137 litres par 100 kg de cossettes introduites, ce qui correspond à l'introduction d'environ 90 litres d'eau fraîche pour 100 kg de cossettes.

Le pH du jus de diffusion est de 5,6 pour un brix de 14,5% et une composition pondérale moyenne de 86,05% d'eau, de 11,07% d'inuline, de 0,51% de sucres (glucose, fructose) et de 2,37% d'impuretés (protéines non sucrées solubles).

Les cossettes épuisées sortant de la diffusion alimentent une presse à vis type MAGUIN à vitesse variable d'où sortent des pulpes dont le taux pondéral de matière sèche est de l'ordre de 15%, ce qui correspondant à 47 kg de pulpes humides par 100 kg de cossettes de chicorée. Les eaux de presse ont un pH de 5,6. La composition des pulpes humides est la suivante:

Tableau II

| Composition des pulpes humides | | |
|---|---|---|
| Inuline | 0,89 kg | 1,88 % |
| Sucres | 0,61 kg | 1,29 % |
| Impuretés | 0,56 kg | 1,18 % |
| Marc | 4,95 kg | 10,45 % |
| Eau | 40,35 kg | 85,20 % |
| Total | 47,36 | 100,0 % |

Le jus de diffusion est ensuite épuré selon la technique d'épuration calcocarbonique synchrone faisant l'objet de l'invention.

Le jus de diffusion dont la température est de 68-72 °C entre dans un préchauleur horizontal de type "BRIEGHEL MULLER" alimenté en lait de chaux et en boues recyclées provenant du décanteur DORR situé en aval de la première chaudière de carbonatation.

Le pH du jus de diffusion est porté dans le préchauleur, à une valeur comprise entre 10,8 et 11,2 ce qui correspond à l'addition de 2,6 à 3,0 g de CaO/litre de jus de diffusion sous forme de lait de chaux à 150g CaO/litre. Le volume des boues recyclées dans le préchauleur correspond à 10% du volume de jus de diffusion.

Le jus préchaulé, sortant par débordement du préchauleur, tombe dans un petit bac tampon muni d'une régulation de niveau pour minimiser le temps de contact à une valeur inférieure à 3 minutes d'où il est envoyé, après passage dans un échangeur pour remonter sa température à 85°C, dans la chaudière de première carbonatation.

L'écoulement de jus préchaulé d'une part et du lait de chaux d'autre part, s'effectuent au-dessus de la couronne d'injection de $CO_2$.

On réalise dans cette chaudière un chaulage massif et une carbonatation synchrone en introduisant de façon simultanée un lait de chaux à 150 g CaO/litre de lait à raison de 12 g CaO/litre de jus préchaulé et du gaz carbonique en quantité suffisante pour maintenir le pH à 11,0, grâce à une vanne d'injection asservie à un pHmètre situé à la sortie de la surverse de la chaudière à carbonater.

Le jus carbonaté qui a un SK (vitesse de sédimentation) de 3 à 4, est ensuite envoyé dans un décanteur vertical type DORR OLIVER d'un diamètre de 950 mm. permettant la séparation jus clair 1-boues. Les boues sont envoyées vers le préchauleur (à raison de 10% du volume de jus de diffusion) et vers un filtre à bande sous vide type PHILIPS d'une surface de filtration de 2m². Les filtrats servent à la préparation du lait de chaux et les écumes sont déssucrées à l'eau avant d'être évacuées. La teneur en sucre des écumes est de 0,4 kg par 100 kg écumes à 48% de siccité.

Le jus clair 1 est réchauffé à 95°C dans un échangeur avant d'être à nouveau carbonaté jusqu'à pH 8,6-8,8 ce qui correspond à une teneur résiduelle en chaux de 0,10 à 0,15 g CaO/litre de jus. Ce jus devenu trouble, appelé jus trouble 2, est ensuite stocké dans un bac de 390 litres muni d'une agitation en attendant d'être filtré sur 2 filtres à cadres GRAND PONT d'une surface de filtration unitaire de 2m². Le jus filtré, appelé jus clair 2, a les caractéristiques suivantes:

| | |
|---|---|
| Brix volume: | 13,2 - 13,5 g/100 ml |
| Coloration, % Brix: | 10 000 - 11 000 |
| Sel de calcium, % Brix | 600 mg |
| Pertes dans les écumes: | 0,30 - 0,38 kg sucres/100kg de cossettes |

Le sucre est exprimé en fructose et glucose ce qui correspond à 0,33-0,42 kg inuline % kg cossettes.

Exemple 2 comparatif

On procède comme dans l'exemple 1 jusqu'à l'opération de diffusion comprise, ensuite le jus de diffusion de cossettes de chicorée est épuré de la manière suivante.

Le jus de diffusion de cossettes de chicorée dont la température est de 68 - 72 °C se déverse dans un préchauleur horizontal de type BRIEGHEL MULLER. Le pH de ce jus est ajusté à 11,0 +0,2 par addition de 2,6 à 3,0 g CaO/litre au moyen de lait de chaux à 150 g CaO/litre.

Ensuite le jus préchaulé sortant par débordement du préchauleur tombe dans un bac de chaulage de 180 litres muni d'une agitation où l'on réalise une addition massive de lait de chaux à raison de 12 g CaO par litre de jus préchaulé jusqu'à ce que le pH soit supérieur à 13,0.

Le temps de contact entre le lait de chaux et le jus de diffusion riche en inuline et sucres réducteurs à pH=13, à une température comprise entre 70 et 85 °C est de l'ordre de 10 à 15 minutes.

Le jus chaulé, après rechauffage à 85°C dans un échangeur, est envoyé dans la chaudière de première carbonation où l'on réalise une injection de gaz carbonique afin de précipiter la chaux sous forme de carbonate de chaux.

Le jus carbonaté est ensuite traité comme dans l'exemple 1.

Après décantation, filtration sur bande, deuxième carbonatation et de nouveau filtration, le jus clair 2 a les caractéristiques suivantes:

| | |
|---|---|
| Brix volume: | 13,2 - 13,5 |
| Coloration % Brix | 16000 - 17000 |
| Sel de calcium % Brix | 600 mg |
| pertes dans les écumes | 1,07 kg sucres/100 kg cossettes |

les pertes sont trois fois plus grandes qu'à l'exemple 1.

**Revendications**

1. Procédé de préparation d'une solution purifiée d'inuline à partir du jus de chicorée en le préchaulant jusqu'à un pH ne dépassant pas 11, caractérisé en ce qu'il consiste à chauler et à carbonater le jus de chicorée préchaulé simultanément et de manière que son pH ne dépasse pas 11.

2. Procédé suivant la revendication 1, caractérisé en ce qu'il consiste à effectuer le chaulage et la carbonatation simultanément par addition au jus d'un débit volumique de $CO_2$ compris entre 3 et 6 litres pour un débit massique de chaux vive compris entre 8 et 15 grammes de CaO par litre de jus.

3. Procédé suivant la revendication 1 ou 2, caractérisé en ce qu'il consiste à effectuer le chaulage et la carbonatation simultanée moins de quinze minutes et, de préférence, moins de cinq minutes après le préchaulage.

4. Procédé suivant l'une des revendications précédentes, caractérisé en ce qu'il consiste à effectuer le préchaulage à un débit massique de chaux vive compris entre 2 et 3 grammes de CaO par litre de jus.

5. Procédé suivant l'une des revendications précédentes, caractérisé en ce qu'il consiste à effectuer le chaulage et la carbonation simultanés à une température comprise entre 80 et 85°C.

**Patentansprüche**

1. Verfahren zur Herstellung einer gereinigten Inulin-Lösung aus Zichoriensaft, diesen vorkalkend bis zu einem pH-Wert nicht über 11,
   **dadurch gekennzeichnet**,
   daß es im gleichzeitigen Kalken und Karbonieren des vorgekalkten Zichoriensaftes besteht und zwar derart, daß sein pH-Wert 11 nicht überschreitet.

2. Verfahren nach Anspruch 1, dadurch gekennzeichnet, daß es im gleichzeitigen Durchführen des Kalkens und des Karbornierens durch Hinzufügen in den Saft einer volumenmenge von $CO_2$ zwischen 3 und 6 Liter für ein Massemenge von ungelöschtem Kalk zwischen 8 bis 10 Gramm CaO pro Liter Saft besteht.

3. Verfahren nach Anspruch 1 oder 2, dadurch gekennzeichnet, daß es im gleichzeitigen Durchführen des Kalkens und des Karbonierens weniger als fünfzehn Minuten, vorzugsweise weniger als fünf Minuten nach dem Vorkalken besteht.

4. Verfahren nach einem der vorhergehenden Ansprüche, dadurch gekennzeichnet, daß es im Durchführen der Vorkalkung bei einer Massemenge ungelöschter Kalk von 2 bis 3 Gramm CaO pro Liter Saft besteht.

5. Verfahren nach einem der vorhergehenden Ansprüche, dadurch gekennzeichnet, daß es im gleichzeitigen Durchführen des Kalkens und des Karbonierens bei einer Temperatur von 80 bis 85°C besteht.

**Claims**

1. Process for preparing a purified inulin solution from chicory juice by pretreating it with lime up a pH not exceeding 11, characterised in that it consists in treating the pretreated chicory juice in lime and simultaneously carbonating it, in such a way that its pH does not exceed 11.

2. Process according to claim 1, characterised in that it consists in carrying out the treatment with lime and the carbonisation simultaneously by adding to the juice a flow volume of $CO_2$ of between 3 and 6 litres for a mass flow of quicklime of between 8 and 15 grams of CaO per litre of juice.

3. Process according to claim 1 or 2, characterised in that it consists in carrying out the lime treatment and simultaneously carbonation less than fifteen minutes and preferably less than 5 minutes after the pretreatment with lime.

4. Process according to one of the preceding claims, characterised in that it consists in carrying out the pretreatment with lime as a mass flow volume of quicklime of between 2 and 3 grams of CaO per litre of juice.

5. Process according to one of the preceding claims, characterised in that it consists in carrying out the lime treatment and simultaneous carbonation at a temperature of between 80 and 85°c.